# EUROPÄISCHE PATENTANMELDUNG

(11) **EP 0 785 241 A2**
(43) Veröffentlichungstag der Anmeldung: **23.07.1997**
(21) Anmeldenummer: 96118098.1
(22) Anmeldetag: 12.11.1996
(51) Int. Cl.: C09D 163/00, C08G 59/58

(54) **Effektpulverlacke, deren Herstellung und Verwendung**

(30) Priorität: 17.01.1996 DE 19601520
(71) Anmelder: HÜLS AKTIENGESELLSCHAFT, 45764 Marl (DE)
(72) Erfinder: Weiss, Jörn Volker, Dr., 45721 Haltern (DE)

(57) **Zusammenfassung**

Lagerstabile Effektpulverlacke mit einer Korngröße kleiner 100 µm, im wesentlichen enthaltend
A) Epoxidharzen mit im Durchschnitt mehr als einer Epoxidgruppe pro Molekül und einem Schmelzpunkt über 70 °C, oder Epoxidharz/Polyester-Mischungen
B) Härter auf Basis eines Salzes bestehend aus einem cyclischen Amidin und einer Polycarbonsäure und
C) hydroxylgruppen aufweisende Carbonsäuren oder Kohlenhydrate und ihre Säurederivate.

## Beschreibung

Gegenstand der Erfindung sind Pulverlacke auf der Grundlage eines Stoffgemisches aus Epoxidverbindungen und gegebenenfalls Polyestern und Salzen von Polycarbonsäuren mit aminogruppenhaltigen Produkten sowie Naturstoffen wie Zucker, Äpfelsäure, Zitronensäure, Weinsäure und Ascorbinsäure.

In der Industrie besteht ein großer Bedarf an Pulverlacken aller Art. Dies liegt vor allem daran, daß man beim Einsatz auf Lösemittel verzichten kann, und nur sehr geringe Verluste bei der Anwendung auftreten. Pulverlacke sind sparsam und umweltschonend.

Die meisten bekannten Pulverlacke ergeben glänzende und glatte Oberflächen. Aus dekorativen wie auch Sicherheitsgründen werden jedoch häufig matte Oberflächen (z. B. um Reflexionen zu vermeiden) oder strukturierte Oberflächen (z. B. um unebene Untergründe zu verbergen) verlangt.

Das einfachste Prinzip, eine matte Oberfläche zu erhalten, besteht darin, dem Pulverlack je nach Ausmaß des gewünschten Matteffekts kleinere oder größere Mengen Füllstoffe, wie z. B. Kreide, feinverteiltes Siliciumdioxid, Bariumsulfat, oder unverträgliche Zusatzstoffe, wie Wachse, Cellulosederivate, beizumischen, wodurch auch Verlaufsänderungen bis hin zu strukturierten Oberflächen erzielt werden. Diese Zusätze bewirken jedoch eine Verschlechterung der lacktechnischen Filmeigenschaften.

In der DE-PS 23 24 696 wird ein Verfahren zur Herstellung von Überzügen mit matter Oberfläche vorgestellt, bei dem ein Spezialhärter - das Salz von cyclischen Amidinen mit bestimmten Polycarbonsäuren - zum Einsatz kommt. Tatsächlich hat sich aufgrund seiner hervorragenden lacktechnischen Eigenschaften (Verlauf und Flexibilität) bevorzugt dieses Verfahren auf dem Markt durchsetzen können; das Verfahren wurde inzwischen mehrfach verbessert (vgl. DE-OSS 30 26 455, 30 26 456 und deutsche Patentanmeldung P 35 11 998.5 vom 02.04.1985 "Härter für pulverförmige Überzugsmittel auf der Basis von Epoxidharzen").

Eine weitere Möglichkeit zur Mattierung epoxidharzhaltiger Pulverlacke wird in der WO 91/08268 beschrieben. Im Gegensatz zur zuvor beschriebenen Methode kommen hierbei keine Salze sondern physikalische Mischungen von festen Säuren mit festen Basen zum Einsatz. Diese sehr einfach herzustellenden Produkte weisen jedoch bezüglich Mattierfähigkeit bei gleichzeitigem Erhalt von gutem Verlauf und entsprechenden mechanischen Eigenschaften Nachteile gegenüber den in der DE-PS 23 24 696 beschriebenen Produkten auf.

Aufgabe der vorliegenden Erfindung war es, Härter zu entwickeln, mit denen neben der Mattierung auch andere dekorative Effekte wie z. B. Strukturierung und/oder eine gleichmäßige Farbstippenbildung reproduzierbar machbar sind.

Die Härter sollten sowohl für Epoxidharze als auch für die sogenannten Hybridsysteme, d. h. Mischsysteme von Epoxid- und Polyesterharzen anwendbar sein.

Überraschenderweise wurde gefunden, daß mit Mischungen, bestehend aus den in der DE-PS 23 24 696 beschriebenen Amidin-Pyromellithsäure-Salzen und hydroxylgruppen aufweisenden Carbonsäuren oder Kohlenhydraten und ihre Säurederivate sich in epoxidharzhaltigen Pulverlacken einfach reproduzierbare Effekte erzielen lassen.

Gegenstand der vorliegenden Erfindung sind demnach lagerstabile Effektpulverlacke mit einer Korngröße kleiner 100 µm, im wesentlichen enthaltend
A) Epoxidharzen mit im Durchschnitt mehr als einer Epoxidgruppe pro Molekül und einem Schmelzpunkt über 70 °C, oder Epoxidharz/Polyester-Mischungen
B) Härter auf Basis eines Salzes bestehend aus einem cyclischen Amidin und einer Polycarbonsäure und
C) hydroxylgruppen enthaltene Carbonsäuren oder Kohlenhydrate und ihre Säurederivate.

Vorteilhaft ist, daß die genannten Stoffe in fester Form der Pulverlackvormischung zugegeben werden, um dann gemeinsam mit all den üblichen Pulverlackrohstoffen extrudiert und anschließend zu den entsprechenden Pulverlacken aufgearbeitet werden.

Die erhaltenen Pulverlacke besitzen eine gute Lagerfähigkeit und die übliche Reaktivität der Amidin-Pyromellithsäure-Epoxy-Systeme.

Die Komponente C ist mit 0,2 bis 5 Gew.-%, vorzugsweise 1 bis 3 Gew.-%, bezogen auf die Summe der Komponenten A bis C, in den Effektpulverlacken enthalten.

Als Komponente C sind erfindungswesentlich hydroxylgruppen aufweisende Carbonsäuren oder Kohlenhydrate und ihre Säurederivate enthalten.

Bevorzugt werden als hydroxylgruppen enthaltene Carbonsäuren Äpfelsäure, Glycerolsäure, Milchsäure, Traubensäure, Zitronensäure, Weinsäure, eingesetzt.

Als Kohlenhydrate können Mono-, Di- oder Polysaccharide enthalten sein, bevorzugt enthalten die Effektpulverlacke jedoch Saccharose, Fruktose oder Glucose.

Bevorzugte Säurederivate der Kohlenhydrate sind Ascorbinsäure, Aldarsäure, Aldonsäure, Glucarsäure, Gluconsäure.

Als Reaktionspartner für die Härter (Komponente B) werden reine Epoxidharze oder Epoxidharz/Polyester-Mischungen (Komponente A) eingesetzt.

Die einsetzbaren Epoxidharze weisen durchschnittlich mehr als eine Epoxidgruppe pro Molekül auf. Sie haben einen Schmelzpunkt von über 70 °C. Die Epoxidharze können sowohl gesättigt als auch ungesättigt, aliphatisch, cycloaliphatisch, araliphatisch oder heterocyclisch sein. Im einzelnen handelt es sich um:
- Epoxide mehrfach ungesättigter Kohlenwasserstoffe, wie z. B. Vinylcyclohexen, Dicyclopentadien, Cyclohexadien-(1,3) und -(1,4), Cyclododecadiene und -triene, Isopren, Hexadien-(1,5), Butadien, Polybutadiene, Divinylbenzole und dergleichen,
- Epoxyether mehrwertiger Alkohole, wie z. B. Ethylen-, Propylen- und Butylenglykol, Glycerin, Pentaerythrit, Sorbit, Polyvinylalkohole und Thiodiglykole,
- Epoxyether mehrwertiger Phenole, wie Resorcin, Hydrochinon, Bis(4-hydroxyphenol)-methan, Bis-(4-hydroxy-3,5-dichlorphenyl)-methan, 1,1-Bis-(4-hydroxyphenyl)-ethan, 2,2-Bis-(4-hydroxyphenyl)-propan, 2,2-Bis-(4-hydroxy-3-methylphenyl)-propan, 2,2-Bis-(4-hydroxy-3,5,5-trichlorphenyl)-propan, Bis-(4-hydroxyphenyl)-phenylmethan, Bis-(4-hydroxyphenyl)-diphenylmethan, Bis-(4-hydroxyphenyl)-cyclohexylmethan, 4,4'-Dihydroxydiphenyl, 2,2'-Dihydroxydiphenyl,
- N-haltige Epoxide, wie N,N-Diglycidylanilin, N,N'-Dimethyldiglycidyl-4,4'-diaminodiphenylmethan, Triglycidylisocyanurat.

Als besonders geeignet haben sich Epoxide auf Bisphenol A-Basis mit einem Epoxid-Äquivalent von 500 bis 2 000 und einem Schmelzpunkt von 70 bis 140 °C erwiesen.

Geeignete Polyester, die in Mengen bis zu 45 Gew.-%, bezogen auf das Gewicht der Epoxidverbindungen, zugesetzt werden können, umfassen Oligoester (cyclo)aliphatischer oder aromatischer Polycarbonsäuren mit (cyclo)aliphatischen Diolen, wobei beide Komponenten 2 bis 36 C-Atome aufweisen.

Zur Herstellung der Oligoester werden aliphatische, cycloaliphatische oder aromatische Di- oder Polycarbonsäuren einerseits und aliphatische oder cycloalipathische Diole andererseits eingesetzt. Die Carbonsäuren bzw. Diole enthalten 2 bis 36 C-Atome. Im Falle der Diole können einzelne Kohlenstoffatome gegebenenfalls auch durch Sauerstoffatome ersetzt sein. Bedingung hierfür ist, daß ein solches Sauerstoffatom durch mindestens 2 Kohlenstoffatome von der Hydroxylgruppe und/oder von einem weiteren Sauerstoffatom in der Kette getrennt ist.

Als Dicarbonsäuren kommen z. B. Bernsteinsäure, Glutarsäure, Adipinsäure, Trimethyladipinsäure, Azelainsäure, Sebazinsäure, Decandisäure, Dodecandisäure, Fumarsäure, Maleinsäure und Isophthalsäure in Frage. Als Polycarbonsäure werden z. B. Benzol-1,3,5-tricarbonsäure, Benzol-1,2,4-tricarbonsäure, Benzol-1,2,3-tricarbonsäure, Naphthalin-1,5-dicarbonsäure, Benzophenon-4,4'-dicarbonsäure, Butantetracarbonsäure, Cyclopentatetracarbonsäure, Pyromellithsäure, Benzol-1,2,3,4-tetracarbonsäure, Benzol-1,2,3,5-tetracarbonsäure, und 3,4-Dicarboxyl-1,2,3,4-tetrahydronaphthalin-1-bernsteinsäure eingesetzt.

Als Diole kommen z. B. Ethylenglykol, Propylenglykol, 1,3- 1,4- oder 2,3-Butandiol, 1,5-Pentandiol, 2,2-Dimethyl-1,3-propandiol, 1,6- und 2,5-Hexandiol, 1,12-Dodecandiol sowie C 36-Diol (PRIPOL® 2033, Fa. Unichema International) in Frage.

Die carboxylgruppenhaltigen Oligoester besitzen eine Säurezahl von 25 bis 100, inbesondere 30 bis 70. Die Erweichungspunkte liegen im allgemeinen im Bereich von 40 bis 110 °C, vorzugsweise im Bereich von 60 bis 90 °C. Typischerweise liegt ihre mittlere Molmasse unterhalb von 2 500.

Die Herstellung der Oligoester ist bekannt (Sorensen u. Campbell - "Preparative Methods of Polymer Chemistry", Interscience Publishers Inc., New York, 1961, Seiten 111 - 127). Im allgemeinen erfolgt die Herstellung bei Temperaturen bis 200 °C durch Kondensation in der Schmelze. Der Reaktionsverlauf kann dabei durch Titration der überschüssigen Carboxylgruppen verfolgt werden, so daß das Ende der Reaktion leicht bestimmt werden kann.

Bei der Herstellung der pulverförmigen Überzugsmittel können weiterhin übliche Zusätze, wie Verlaufmittel, Pigmente, Farbstoffe, Füllstoffe und Katalysatoren Verwendung finden. Die Menge dieser Zusätze kann, bezogen auf die Menge des Bindemittels, innerhalb eines weiten Bereichs schwanken.

Die Herstellung der Überzugsmittel erfolgt beispielsweise in der Weise, daß man die einzelnen Komponenten (Epoxidharze, Härter und gegebenenfalls Zusätze) gegebenenfalls mahlt, trocken mischt und bei 90 bis 125 °C extrudiert. Nach dem Extrudieren wird abgekühlt und auf eine Korngröße kleiner als 100 µm gemahlen.

Die Applikation auf die zu überziehenden Substrate erfolgt nach bekannten Methoden, z. B. durch elektrostatisches Pulversprühen. Anschließend wird das aufgetragene Überzugsmittel 10 bis 35 Minuten im Temperaturbereich zwischen 160 bis 240 °C, vorzugsweise 15 bis 20 Minuten, zwischen 180 bis 220 °C ausgehärtet.

Die lacktechnischen Eigenschaften wurden mit Hilfe der nachstehenden Prüfmethoden bestimmt:
Tiefung nach Erichsen in mm (DIN 53 156)
Kugelschlagprüfung nach Gardner (ASTM D 2794)
Glanzgrad nach Gardner bei 60 °C (ASTM D 523)

### Beispiele 1 bis 7

Die vorgenannten Naturstoffe werden zusammen mit einem handelsüblichen Matthärter (z. B. VESTAGON B 68, Hüls AG, Marl, Deutschland) und den übrigen Pulverlackkomponenten (Epoxidharz und gegebenenfalls Polyester, Titandioxid, Verlaufmittel in Form eines 10 %igen Masterbatches, etc.) in einem Vormischer grob gemischt und in einem Doppelwellenextruder bei ca. 120 °C extrudiert. Das abgekühlte Extrudat wird zu einem feinen Pulver vermahlen, wobei die Grobanteile über 100 µm durch ein Sieb abgetrennt werden. Das so erhaltene Pulver wird in einer elektrostatischen Pulverspritzanlage bei einer Spannung von 60 KV auf Stahlbleche appliziert und in einem Umlufttrockenschrank bei Temperaturen zwischen 180 und 220 °C eingebrannt (siehe Tabelle 1 und 2).

**Tabelle 1**

| **Zusammensetzung der Effektpulverlacke** (Angaben in Mengenanteilen) | | | | | | | |
|---|---|---|---|---|---|---|---|
| **Beispiel Nr.** | **1** | **2** | **3** | **4** | **5** | **6** | **7** |
| VESTAGON B 68 | 52 | 52 | 49 | 52 | 52 | 54,5 | 52 |
| EPIKOTE 1055 | 468 | 468 | 309 | 468 | 468 | 490,5 | 468 |
| CRYLCOAT 316 | - | - | 177 | - | - | - | - |
| Saccharose | - | 30 | - | - | - | - | - |
| Ascorbinsäure | 30 | - | 15 | 15 | 15 | 15 | - |
| Weinsäure | - | - | - | 15 | - | - | - |
| Zitronensäure | - | - | - | - | - | 15 | - |
| Äpfelsäure | - | - | - | - | 15 | - | 30 |
| Verlaufmittel | 50 | 50 | 50 | 50 | 50 | 25 | 50 |
| TiO₂ | 400 | 400 | 400 | 400 | 400 | 400 | 400 |

**Tabelle 2**

| **Lacktechnische Kenndaten** | | | | | | | |
|---|---|---|---|---|---|---|---|
| **Beispiel Nr.** | **1** | **2** | **3** | **4** | **5** | **6** | **7** |
| Kugelschlag (dir) | > 80 | > 80 | > 80 | 80 | 70 | 70 | > 80 |
| Erichsentiefung | 7,5 | 8,5 | 9,0 | 4,5 | 4,0 | 5,5 | 8,0 |
| Glanz 60 ° ∢ | 4 | 6 | 11 | 8 | 8 | 8 | 12 |
| Härtungsbedingungen = 15 min/200 °C | | | | | | | |

### Oberflächenbeurteilung

### Beispiel (Nr.)

1: guter Verlauf, beige matte Beschichtung mit gleichmäßig verteilten braun/schwarzen Stippen
2: guter Verlauf, hellbeige matte Beschichtung mit gleichmäßig sehr fein verteilten braun/schwarzen Stippen
3: wie 1
4: wie 5
5: hellbeige matte Beschichtung, sonst wie 6
6: beige matte Beschichtung, fein strukturiert mit gleichmäßig verteilten braun/schwarzen Stippen
7: weiß matte Beschichtung mit gleichmäßiger, sehr fein strukturierter Oberfläche

### Vergleichsbeispiel A

Aus 55 Teilen VESTAGON B 68, 495 Tle. EPIKOTE 1055 (Produkt der Firma Shell), 400 Tle. TiO₂ und 50 Tle. EPIKOTE 3003-4F-10 (Verlaufmittel der Firma Shell) wurde nach obigem Verfahren ein Pulverlack hergestellt und auf ein 1 mm starkes Eisenblech appliziert. Einbrennbedingungen 15 min/200 °C.

### Lacktechnische Kenndaten

- Kugelschlag (dir): > 80
- Erichsentiefung: 7,5
- Glanz 60 ° ∢: 7

Oberfläche = weiß, matt, ausgezeichneter Verlauf, völlig eben.

### Vergleichsbeispiel B

Aus 50 Teilen VESTAGON B 68, 282 Tle. EPIKOTE 1055, 218 Tle. CRYLCOAT 316 (Polyester der Firma UCB, Belgien), 400 Tle. TiO₂ und 50 Tle. EPIKOTE 3003-4F-10 wurde nach obigem Verfahren ein Pulverlack hergestellt und auf ein 1 mm starkes Eisenblech appliziert.

Einbrennbedingungen 15 min/200 °C

### Lacktechnische Kenndaten

- Kugelschlag (dir): > 80
- Erichsentiefung: 9,0
- Glanz 60 ° ∢: 12

Oberfläche = weiß, matt, guter Verlauf, leichter Orangenschaleneffekt.

## Patentansprüche

1. Lagerstabile Effektpulverlacke mit einer Korngröße kleiner 100 µm, im wesentlichen enthaltend
A) Epoxidharzen mit im Durchschnitt mehr als einer Epoxidgruppe pro Molekül und einem Schmelzpunkt über 70 °C, oder Epoxidharz/Polyester-Mischungen,
B) Härter auf Basis eines Salzes bestehend aus einem cyclischen Amidin und einer Polycarbonsäure und
C) hydroxylgruppen aufweisende Carbonsäuren oder Kohlenhydrate und ihre Säurederivate.

2. Lagerstabile Effektpulverlacke nach Anspruch 1,
dadurch gekennzeichnet,
daß sie Zusätze, ausgewählt aus der Gruppe Verlaufmittel, Pigmente, Farbstoffe, Füllstoffe, Katalysatoren, enthalten.

3. Lagerstabile Effektpulverlacke nach den Ansprüchen 1 bis 2,
dadurch gekennzeichnet,
daß Epoxide mehrfach ungesättigter Kohlenwasserstoffe, ausgewählt aus der Gruppe Vinylcyclohexen, Dicyclopentadien, Cyclohexadien-(1,3) und -(1,4), Cyclododecadiene und -triene, Isopren, Hexadien-(1,5), Butadien, Polybutadiene, Divinylbenzole, enthalten sind.

4. Lagerstabile Effektpulverlacke nach den Ansprüchen 1 bis 2,
dadurch gekennzeichnet,
daß Epoxyether mehrwertiger Alkohole, ausgewählt aus der Gruppe Ethylen-, Propylen- und Butylenglykol, Glycerin, Pentaerythrit, Sorbit, Polyvinylalkohole, Thiodiglykole, enthalten sind.

5. Lagerstabile Effektpulverlacke nach den Ansprüchen 1 bis 2,
dadurch gekennzeichnet,
daß Epoxyether mehrwertiger Phenole, wie Resorcin, Hydrochinon, Bis(4-hydroxyphenol)-methan, Bis-(4-hydroxy-3,5-dichlorphenyl)-methan, 1,1-Bis-(4-hydroxyphenyl)-ethan, 2,2-Bis-(4-hydroxyphenyl)-propan, 2,2-Bis-(4-hydroxy-3-methylphenyl)-propan, 2,2-Bis-(4-hydroxy-3,5,5-trichlorphenyl)-propan, Bis-(4-hydroxyphenyl)-phenylmethan, Bis-(4-hydroxyphenyl)-diphenylmethan, Bis-(4-hydroxyphenyl)-cyclohexylmethan, 4,4'-Dihydroxydiphenyl, 2,2'-Dihydroxydiphenyl, enthalten sind.

6. Lagerstabile Effektpulverlacke nach den Ansprüchen 1 bis 2,
dadurch gekennzeichnet,
daß N-haltige Epoxide, wie N,N-Diglycidylanilin, N,N'-Dimethyldiglycidyl-4,4'-diaminodiphenylmethan, Triglycidylisocyanurat, enthalten sind.

7. Lagerstabile Effektpulverlacke nach den Ansprüchen 1 bis 2,
dadurch gekennzeichnet,
daß Epoxide auf Bisphenol A-Basis mit einem Epoxid-Äquivalent von 500 bis 2 000 und einem Schmelzpunkt von 70 bis 140 °C, enthalten sind.

8. Lagerstabile Effektpulverlacke nach den Ansprüchen 1 bis 7,
dadurch gekennzeichnet,
daß bis zu 45 Gew.-% Polyester, bezogen auf das Gewicht der Epoxidverbindungen, ausgewählt aus der Gruppe Oligoester aliphatischer und/oder cycloaliphatischer und/oder aromatischer Polycarbonsäuren mit aliphatischen und/oder cycloaliphatischen Diolen, wobei beide Komponenten 2 bis 36 C-Atome aufweisen, enthalten sind.

9. Lagerstabile Effektpulverlacke nach Anspruch 8,
dadurch gekennzeichnet,
daß als Dicarbonsäuren Bernsteinsäure, Glutarsäure, Adipinsäure, Trimethyladipinsäure, Azelainsäure, Sebazinsäure, Decandisäure, Dodecandisäure, Fumarsäure, Maleinsäure und Isophthalsäure und als Polycarbonsäuren Benzol-1,3,5-tricarbonsäure, Benzol-1,2,4-tricarbonsäure, Benzol-1,2,3-tricarbonsäure, Naphthalin-1,5-dicarbonsäure, Benzophenon-4,4'-dicarbonsäure, Butantetracarbonsäure, Cyclopentatetracarbonsäure, Pyromellithsäure, Benzol-1,2,3,4-tetracarbonsäure, Benzol-1,2,3,5-tetracarbonsäure, und/oder 3,4-Dicarboxyl-1,2,3,4-tetrahydronaphthalin-1-bernsteinsäure, enthalten sind.

10. Lagerstabile Effektpulverlacke nach Anspruch 8,
dadurch gekennzeichnet,
daß als Diole Ethylenglykol, Propylenglykol, 1,3- 1,4- oder 2,3-Butandiol, 1,5-Pentandiol, 2,2-Dimethyl-1,3-propandiol, 1,6- und 2,5-Hexandiol, 1,12-Dodecandiol und/oder C 36-Diol (PRIPOL® 2033 Fa. Unichema International), enthalten sind.

11. Lagerstabile Effektpulverlacke nach den Ansprüchen 8 bis 10,
dadurch gekennzeichnet,
daß die Oligoester eine Säurezahl von 25 bis 100 und Erweichungspunkte im Bereich von 40 bis 110 °C sowie eine mittlere Molmasse unterhalb von 2 500 aufweisen.

12. Lagerstabile Effektpulverlacke nach Anspruch 11,
dadurch gekennzeichnet,
daß sie Säurezahlen von 30 bis 70 und Erweichungspunkte von 60 bis 90 °C aufweisen.

13. Effektpulverlacke nach den Ansprüchen 1 bis 12,
dadurch gekennzeichnet,
daß sie als Härter das Monosalz aus Phenylimidazolin und Pyromellithsäure enthalten.

14. Effektpulverlacke nach den Ansprüchen 1 bis 13,
dadurch gekennzeichnet,
daß die Komponente C in Mengen von 0,2 bis 5 % Gewichtsteilen (bezogen auf Gesamtgewicht der Komponenten A bis C) enthalten ist.

15. Effektpulverlacke nach Anspruch 14,
dadurch gekennzeichnet,
daß die Komponente C in Mengen von 1 bis 3 Gew.-% enthalten ist.

16. Effektpulverlacke nach den Ansprüchen 1 bis 15,
dadurch gekennzeichnet,
daß als hydroxylgruppen enthaltene Carbonsäuren Äpfelsäure, Glycerolsäure, Milchsäure, Traubensäure, Zitronensäure, Weinsäure, enthalten sind.

17. Effektpulverlacke nach den Ansprüchen 1 bis 15,
dadurch gekennzeichnet,
daß als Kohlenhydrate Mono-, Di- oder Polysaccharide enthalten sind.

18. Effektpulverlacke nach Anspruch 17,
dadurch gekennzeichnet,
daß Saccharose, Fruktose oder Glucose enthalten sind.

19. Effektpulverlacke nach den Ansprüchen 1 bis 15,
dadurch gekennzeichnet,
daß Ascorbinsäure, Aldarsäure, Aldonsäure, Glucarsäure, Gluconsäure, enthalten sind.
